# EUROPEAN PATENT SPECIFICATION

(11) **EP 4 187 477 B1**
(45) Date of publication and mention of the grant of the patent: **03.09.2025**
(21) Application number: 21906304.7
(22) Date of filing: 26.11.2021
(51) Int. Cl.: G06Q 50/08, E02F 9/26, E02F 9/20

(54) **SYSTEM FOR DETERMINING CHANGE TO WORK CONTENT AND FUNCTION CONTENT**
SYSTEM ZUR BESTIMMUNG DER ÄNDERUNG VON ARBEITSINHALTEN UND FUNKTIONSINHALTEN
SYSTÈME PERMETTANT DE DÉTERMINER UNE MODIFICATION DE CONTENU DE TRAVAIL ET DE CONTENU DE FONCTION

(30) Priority: 14.12.2020 JP 2020207024
(43) Date of publication of application: 31.05.2023
(73) Proprietor: Hitachi Construction Machinery Co., Ltd., Tokyo 110-0015 (JP)
(72) Inventor: SAITO, Yuho, Tokyo 100-8280 (JP); MORIKI, Hidekazu, Tokyo 100-8280 (JP); IMURA, Shinya, Tsuchiura-shi, Ibaraki 300-0013 (JP)
(74) Representative: Manitz Finsterwald Patent- und Rechtsanwaltspartnerschaft mbB
(86) International application number: PCT/JP2021/043461
(87) International publication number: WO 2022/130941

(56) References cited:
- JP-A- 2006 331 341
- JP-A- 2006 331 341
- JP-A- 2010 157 206
- JP-A- 2014 127 174
- JP-A- 2014 127 174

## Description

### Technical Field

The present invention relates to a work and function content change determination system that determines whether or not to change work and function content.

### Background Art

Perimeter monitoring devices have been known, which detect a predetermined monitoring object (e.g., a person) in the vicinity of a work machine such as an excavator, and then output an alarm or restrict the operation of the work machine. For example, the perimeter monitoring device described in Patent Literature 1 outputs an alarm or restricts the operation of the work machine when detecting a monitoring object within a predetermined first range in the height direction of the work machine, and also cancels the function in accordance with the judgment of the responsible person.

### Citation List

### Patent Literature

Patent Literature 1 WO2019/111859 A1

### Summary of Invention

### Technical Problem

If there are multiple control functions and work contents, for example, the configuration described in Patent Literature 1, however, does not specify a responsible person who is able to make an appropriate determination on the control contents and work contents with high risk when their restrictions are canceled, and thus may have difficulty to identify the responsible person or apply the determination to the work machine or its operator.

A work and function content change determination system having the features of the preamble of claim 1 is known from JP 2014 127174 A. Related techniques are described in JP 2006 331341 A.

In view of the above problems, the present invention aims to provide a work and function content change determination system that leaves a responsible person to make a determination whether or not to change work content and function content in a timely manner.

### Solution to Problem

To solve the above problems, a work and function content change determination system according to the present invention determines whether or not to change work content and function content at a civil engineering and construction site, and includes a determination device communicably connected to a first terminal and a second terminal. When receiving information on application content of application for change of the work content and function content from the first terminal, the determination device uses the information on the application content of application for change to identify an authorized person who has authority to approve the application for change, transmits the information on the application content of application for change and authority information on the authorized person identified to the second terminal, and makes an inquiry to the authorized person whether or not to change the work content and function content, and when receiving information on a determination result permitting the application for change from the second terminal that the identified authorized person has, the determination device changes the work content and function content in accordance with the application content and transmitting the work content and function content changed based on the application for change to the first terminal. When receiving information on the applicant who makes the application for change of the work content and function content from the first terminal, the determination device determines whether or not the applicant has authority to apply for the change of the work content and function content based on the information on the applicant, and when the determination device determines that the applicant has the authority to apply, the determination device makes the inquiry to the second terminal. When the authorized person identified by the second terminal and the authorized person identified by the determination device do not match, the determination device re-identifies the authorized person, transmits the information on the application content of application for change and authority information on the authorized person re-identified to the second terminal, and makes an inquiry to the authorized person whether or not to change the work content and function content.

### Advantageous Effects of Invention

When there are multiple work contents or function contents, the present invention identifies a responsible person who can make an appropriate determination regarding the control contents or work contents with high risk if their limitations are canceled. Then only when the responsible person approves, the present invention permits to change the control contents and the work contents, thus leaving the determination up to the responsible person in a timely manner.

Further features of the present invention will become apparent from the description of the specification and the accompanying drawings. Other problems, configurations and advantageous effects also will be clear from the following descriptions of the embodiments.

### Brief Description of Drawings

Fig. 1 schematically shows a hydraulic excavator that is one example of the work machine.
Fig. 2 is a functional block diagram of a work and function content change determination system in Embodiment 1.
Fig. 3 shows an overview of the work and function content change determination system in Embodiment 1.
Fig. 4 is a flowchart of the work and function content change determination system in Embodiment 1.
Fig. 5 is a functional block diagram of a work and function content change determination system in Embodiment 2.
Fig. 6 is a functional block diagram of a work and function content change determination system in Embodiment 3.

### Description of Embodiments

The following describes some embodiments of a work and function content change determination system according to the present invention, with reference to the drawings.

### <Embodiment 1>

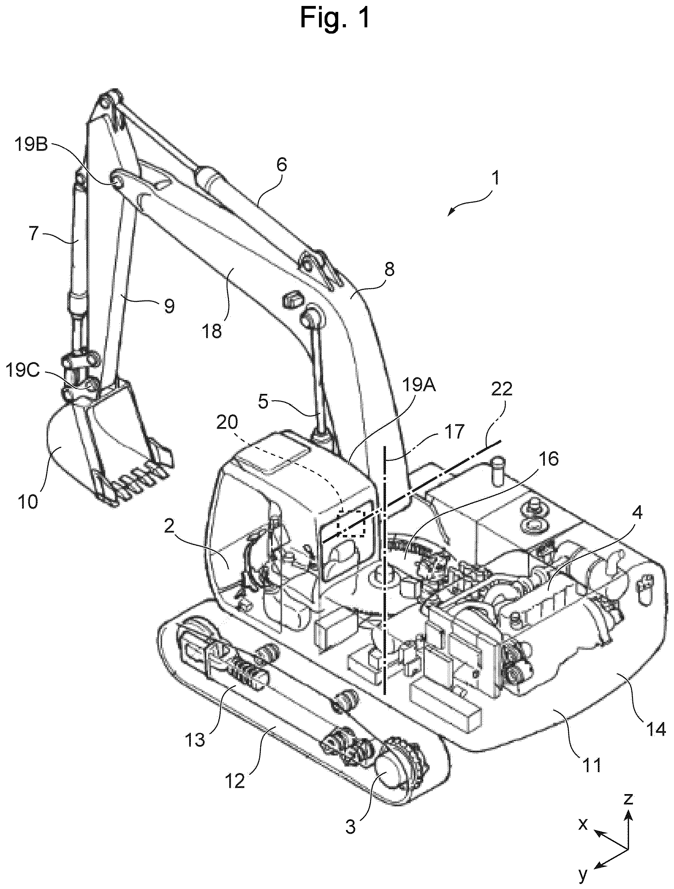

Referring first to Fig. 1, the following describes the structure of a hydraulic excavator 1. Fig. 1 schematically shows a conventional hydraulic excavator 1. The hydraulic excavator 1 includes a lower traveling body 13, and an upper slewing body 14 mounted on the lower traveling body 13 via a slewing mechanism 16. The slewing mechanism 16 includes a hydraulic motor and turns the upper slewing body 14 clockwise or counterclockwise. The hydraulic excavator 1 includes a posture detection section that detects the slewing angle of the slewing mechanism 16 and its fluctuations, and transmits them to a controller 20. A boom 8 is attached to the upper slewing body 14. The boom 8 vertically swings relative to the upper slewing body 14 by a boom cylinder 5 that is hydraulically driven. An arm 9 is attached to the distal end of the boom 8. The arm 9 swings back and forth relative to the boom 8 by an arm cylinder 6 that is hydraulically driven. A bucket 10 is attached to the distal end of the arm 9. The bucket 10 swings relative to the arm 9 by a bucket cylinder 7 that is hydraulically driven. The upper slewing body 14 also has a cab 2 mounted thereon, and the cab 2 accommodates an operator 52. In this specification, the boom 8, arm 9, and bucket 10 are collectively referred to as an attachment 18. The attachment 18 pivots around a pivot center 17 together with the upper slewing body 14. The distance from the pivot center 17 to the distal end of attachment 18 varies with the swinging of the boom 8, arm 9, and bucket 10. Note that the upper slewing body 14 slews around the pivot center 17 and the attachment 18 is attached to the upper slewing body 14.

The boom 8 swings up and down around a swing center 22 parallel to the y-axis. The arm 9 is attached to the distal end of the boom 8, and the bucket 10 is attached to the distal end of the arm 9. Posture sensors 19A, 19B, and 19C are attached to the base of the boom 8, the connection between the boom 8 and the arm 9, and the connection between the arm 9 and the bucket 10, respectively. The posture sensor 19A measures an angle β1 between the longitudinal direction of the boom 8 and the xy plane, and transmits the angle β1 to the controller 20. The posture sensor 19B measures an angle β2 between the longitudinal direction of the boom 8 and the longitudinal direction of the arm 9, and transmits the angle β2 to the controller 20. The posture sensor 19C measures an angle β3 between the longitudinal direction of the arm 9 and the longitudinal direction of the bucket 10, and transmits the angle β3 to the controller 20. The longitudinal direction of the boom 8 refers to the direction of a straight line that passes through the swing center 22 and the connection between the boom 8 and the arm 9 in the xz plane about the swing center 22. The longitudinal direction of the arm 9 refers to the direction of a straight line that passes through the connection between the boom 8 and the arm 9 and the connection between the arm 9 and the bucket 10 in the xz plane. The longitudinal direction of the bucket 10 refers to the direction of a straight line that passes through the connection between the arm 9 and the bucket 10 and the distal end of the bucket 10 in the xz plane.

The swing center 22 is located off the pivot center 17. **In** one structure, the pivot center 17 and the swing center 22 may intersect. The posture detection section may include inertial moment units (IMUs) as the posture sensors 19A to 19C to acquire the angle data on the boom 8, the arm 9, and the bucket 10.

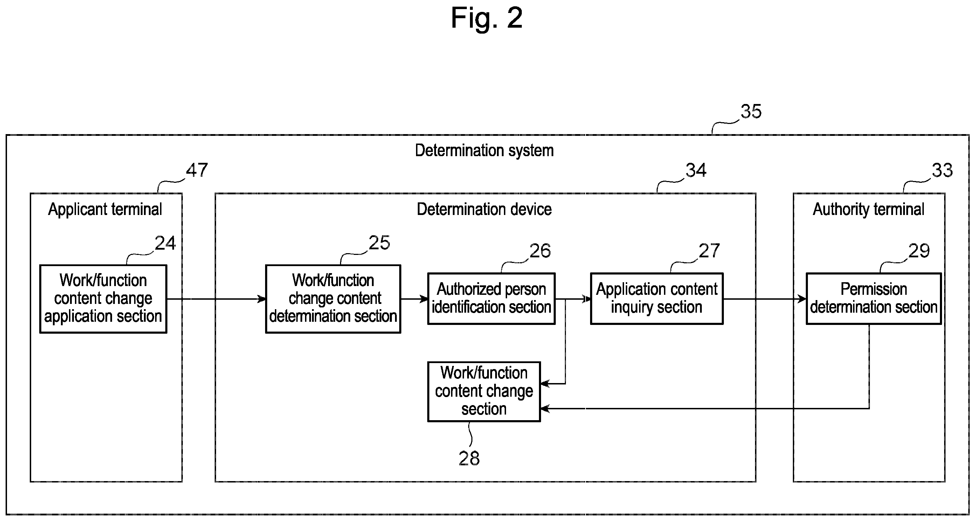

Fig. 2 is a functional block diagram of a work and function content change determination system 35 in Embodiment 1.

The work and function content change determination system 35 determines whether or not to change work content and function content at a civil engineering and construction site, and the system includes a determination device 34 installed in a server. This determination device 34 is connected to an applicant terminal (first terminal) 47 and an authority terminal (second terminal) 33 to be communicable with each other. The applicant terminal 47 is operated by an applicant who applies for a change of work content and function content at a civil engineering and construction site, and the authority terminal 33 is operated by an authorized person who has the authority to approve the application for change. The determination device 34 is implemented through cooperation of computer hardware such as a CPU, memory, and an input/output device, and a software program installed and executed in the hardware. The applicant terminal (first terminal) 47, the authority terminal (second terminal) 33, and the determination device 34 may constitute the determination system 35.

In the work and function content change determination system 35, information on the application content to change work content and function content is transmitted from the applicant terminal 47 to the determination device 34. Receiving the information on the application content to change work content and function content from the applicant terminal 47, the determination device 34 uses the information on the application content for change to identify an authorized person who has the authority to approve the application for change, transmits the information on the application content for change to the authority terminal 33 that the identified authorized person has, and inquires of the authorized person whether or not to change the work content and function content.

The authority terminal 33 then accepts the input of information on a determination result of the approval by the authorized person. When the authorized person inputs the information on the determination result, the authority terminal 33 transmits the information on the determination result to the determination device 34. The determination device 34 transmits the information on the determination result to the applicant terminal 47, and the applicant terminal 47 outputs the determination result as to whether or not the work content and function content can be changed.

When receiving the information on the determination result permitting a change of the work content and function content from the authority terminal 33, the determination device 34 changes the work content and function content in accordance with the application content for change and transmits the work content and function content changed in accordance with the application content to the applicant terminal 47. The work content and function content changed by the determination device 34 are output at the applicant terminal 47.

The applicant terminal 47 has a work/function content change application section 24, and the authority terminal 33 has a permission determination section 29. The determination device 34 has a work/function change content determination section 25, an authorized person identification section 26, an application content inquiry section 27, and a work/function content change section 28.

The work/function content change application section 24 of the applicant terminal 47 selects the work content or function content that the applicant wishes to change, which is input by the applicant with the applicant terminal 47, and transmits information on the application content to change the work content or function content to the determination device 34. The work/function content change application section 24 also transmits information on the applicant who makes the application for change to the determination device 34. This information on the applicant includes information such as qualifications, licenses, the job title, and skills that the applicant has.

Receiving information on the applicant who makes the application for change of work content and function content from the applicant terminal 47, the work/function change content determination section 25 of the determination device 34 uses the information on the applicant to determine whether or not the applicant has the authority to apply for the change of the content. The work/function change content determination section 25 determines a plurality of application contents from one or more applicant terminals 47 received from their work/function content change application section 24, and determines for each application content about whether or not the applicant can apply for the content. If the applicant can apply for the content of the application, the work/function change content determination section 25 transmits the information on the applicant and the information on the application content together with the determination result to the authorized person identification section 26.

The authorized person identification section 26 of the determination device 34 identifies one or more authorized persons who can make a determination about the application content, that is, who have the authority for approval of the application content, from one or more authorized persons 60 registered in advance, in accordance with the determination result of the work/function change content determination section 25. Then, the authorized person identification section 26 transmits the work content and function content to be changed and the information on the authorized person in association with the content to the application content inquiry section 27 and the work/function content change section 28.

If the work/function change content determination section 25 determines that the applicant has the authority to apply for the change of the application content, then the application content inquiry section 27 of the determination device 34 makes an inquiry to the authority terminal 33 of the authorized person who is identified by the authorized person identification section 26 and has the authority to approve. The application content inquiry section 27 transmits the work content and function content to be applied for change to the authority terminal 33 that the authorized person identified by the authorized person identification section 26 has.

The permission determination section 29 of the authority terminal 33 acquires the determination result determined by the authorized person 60 based on the application content received from the application content inquiry section 27, and transmits the determination result on the approval to the work/function content change section 28.

Based on the authority information associated with the work content and function content to be changed and obtained from the authorized person identification section 26, and the determination result on the approval about whether the change is permitted or not obtained from the permission determination section 29, if the result indicates permitted (approval), the work/function content change section 28 of the determination device 34 changes the work content and function content. If the result indicates not permitted (disapproval), the work/function content change section 28 does not change the work content and function content. The determination device 34 transmits, to the applicant terminal 47, the information on whether or not the work content and function content has been changed by the work/function content change section 28 based on the information on the determination result of the approval about whether or not the change is approved, obtained from the permission determination section 29.

The applicant terminal 47 outputs the information on whether or not the work content and function content have been changed in accordance with the application for change, and if it is changed, outputs the changed work content and function content, and displays them on the display section of the applicant terminal 47. If the work/function content change section 28 changes the work content and function content, the display section of the applicant terminal 47 displays the changed work content and function content. In this embodiment, both the applicant terminal 47 and the authority terminal 33 have the display section, so that the applicant and the authorized person both can see the changed work content and function content.

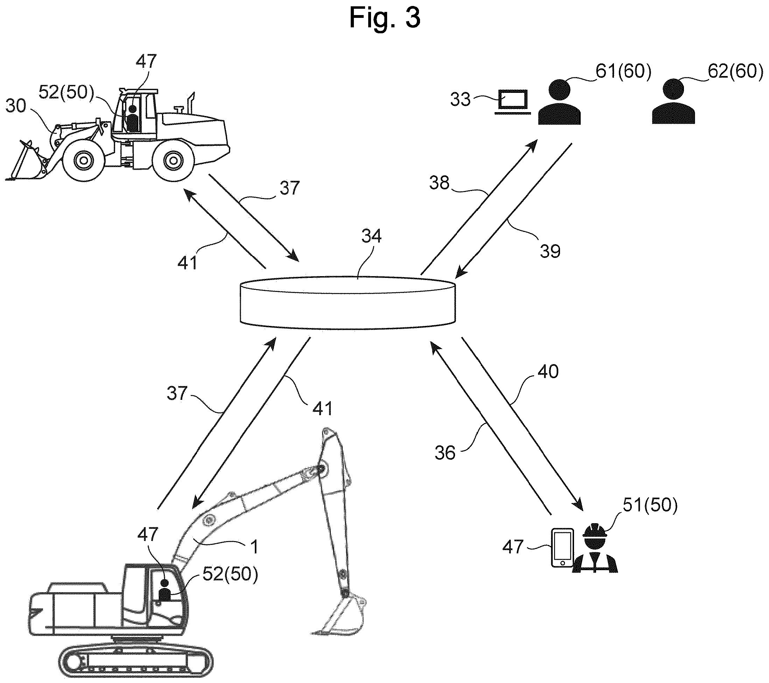

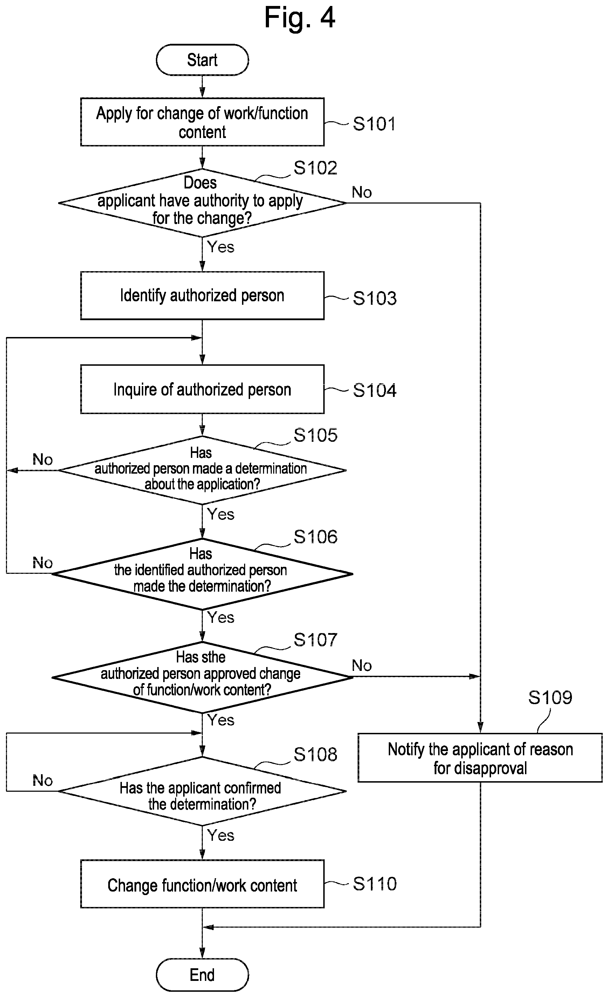

Referring next to Figs. 3 and 4, the following describes a method of making a determination as to a change of work content and function content using the work and function content change determination system 35 of Embodiment 1 according to the present invention. Referring first to Fig. 3, the following describes the relationship between the applicant terminal 47 that the applicant 50 (e.g., the operator 52 or the worker 51 of the hydraulic excavator 1 or a wheel loader 30 at the construction site (civil engineering and construction site)) has, the authority terminal 33 operated by authorized persons 61 and 62, and the determination device 34.

First, when the applicant 50 such as the worker 51 or the operator 52 applies for a change of the work content or function content, they use their applicant terminal 47, which is an authorized device capable of network connection, such as a smartphone, smartwatch, or tablet, to input the password or perform authentication with the terminal, thus performing authentication process of the applicant 50. This authentication process may be biometric authentication such as fingerprint, vein, and face authentication. After this authentication process by these methods, each applicant 50 operates their applicant terminal 47 to select the work content and function content to be changed, and transmits a request for change together with the information on the applicant to the determination device 34. In response to the operation by the applicant 50, the applicant terminal 47 transmits information on the applicant 50 and the information on the work content and function content to be changed that are selected by the applicant 50 to the determination device 34. The information on the applicant 50 may be stored in advance in the database of the determination device 34 and may be extracted based on the information on the authentication process transmitted from the applicant terminal 47.

Receiving the request of application for change, the determination device 34 first compares the information on the applicant 50 with the content to be changed, and determines whether or not the applicant is able to request a change of the work content and function content that they requested. In other words, the determination device 34 determines whether or not the applicant has the authority to apply for the request.

For instance, the applicant 50 may be a worker 51 with a short work history or an operator 52 with a short operation history, or an applicant 50 may have accidents in the past. In these cases, changing the work content and function content may jeopardize the safety, and therefore they have to be fixed or restricted to certain types of work or functions. When the applicant 50 applies for a change of content with the applicant terminal 47, the determination device 34 automatically determines whether or not the actions of this applicant 50 are fixed or restricted to certain types of works or functions, based on the applicant's information.

Next, the determination device 34 identifies an authorized person 60 with the job title capable of making a determination in accordance with the application content, and collects the application content and information on the applicant as a work/function content change request 38 and transmits the request 38 to the authority terminal 33 of the authorized person 60. When receiving the work/function content change request 38, the authority terminal 33 notifies the authorized person 60 as such.

The authority terminal 33 identifies the authorized person through electronic or biometric authentication, including wireless, and determines whether or not the authorized person matches the authorized person identified at the determination device 34. Then, if they match, the authority terminal 33 transmits information on the determination result of approval by the authorized person to the determination device 34, and if they do not match, the authority terminal 33 transmits mismatch information to the determination device 34. The determination device 34 then identifies the authorized person again at the authorized person identification section 26, transmits information on the application content for a change to the authority terminal 33 that the authorized person re-identified has, and inquires of the authorized person whether or not the work content and function content can be changed.

The authorized person 60 uses an authentication device with network connectivity, such as a smartphone, smartwatch or tablet, as the authority terminal 33, and the authority terminal 33 accepts password input or performs terminal authentication to perform authentication process of the authorized person 60. This authentication process may be biometric authentication such as fingerprint, vein, and face authentication. The permission determination section 29 may also permit a change of work content and function content only when the authorized person identified at the authorized person identification section 26 matches the authorized person identified by the authority terminal 33 through electronic or biometric authentication, including wireless.

After being authenticated through these methods, the authorized person 60 determines whether or not to approve the change, and inputs the determination result to the authority terminal 33. The authority terminal 33 collects the determination result whether or not to approve the change and the authorized person's information to be a work/function content change determination result 39, and transmits this result 39 to the determination device 34. When there is more than one authorized person 60 (the authorized persons 61 and 62 in the example shown in Fig. 3), their authority terminals 33 transmit information on all the authorized persons 60 and all the determination results to the determination device 34.

When receiving the determination result and information on the authorized person 60 from the authority terminal 33, the determination device 34 checks whether the authorized person 60 identified in advance matches the authorized person 60 who conducted the determination. Only when they match, the work/function content change section 28 determines whether or not to change the work content and function content, and transmits the determination result, that is, a work content change request result 40, to the applicant terminal 47 that the applicant 50 has. For instance, when the applicant 50 is the worker 51 shown in Fig. 3, the determination device 34 transmits the work content change request result 40 to the applicant terminal 47 of the worker 51, and when the applicant 50 is the operator 52 shown in Fig. 3, the determination device 34 transmits the work content change request result 41 to the applicant terminal 47 of the operator 52. If the authorized person 60 identified in advance does not match the authorized person 60 who conducted the determination, the determination device 34 transmits the application content and information on the applicant 50 to the authority terminal 33 of the authorized person 60 who is re-identified. Also, if the determination device 34 does not receive the determination result from the authority terminal 33 within a certain period of time, it transmits to the applicant terminal 47 a disapproval of content change. The work content and function content change request result is stored in the database of the determination device 34, and can be referred to when another worker 51 or operator 52 requests confirmation. The information of the work content and function content change request result 41 may be distributed to the terminals of the worker(s) 51 and operator(s) 52 who are performing the same work.

When there is more than one authorized person 60, and the determination results of these authorized persons 60 are the same, the determination device 34 transmits the content change result to the applicant terminal 47. When there is more than one authorized person 60, and their determination results are not the same, two patterns of the method are available: including a method of prioritizing operational efficiency and making a determination by majority vote; and a method of prioritizing safety and not changing the function if the judgment results of all the authorized persons are not the same. Even when there is more than one authorized person 60, and the determination results of these authorized persons 60 are not the same for the same application content, the determination device 34 may prioritize the determination result by the authorized person 60 at a higher level, for example, at a higher level of the job title. Note here that the authorized person(s) 60 can be registered in advance, and may be registered according to their job titles, or can be set in details for each team (for each company or each vehicle body). When there is more than one authorized person 60, not all the authorized persons 60 need to make permission determinations.

When receiving the work content change request result 40 with the applicant terminal 47, the worker 51 is able to change the work content in accordance with this work content change request result 40. If the received result is "permitted", the worker 51 performs authentication process again using the applicant terminal 47, which is the authentication device that performed the authentication process at the time of application, to "accept" the result received. Then, the worker 51 is allowed to change the work content. The work content that the worker 51 is able to change includes changes in the scope of work, changes in cooperating construction machines such as excavating machines, transport machines, and compaction machines, and changes in the work content.

When receiving the function content change request result 41 with the applicant terminal 47, the operator 52 is able to change the function content in accordance with this function content change request result 41. If the received result is "permitted", the operator 52 performs authentication process again using the applicant terminal 47, which is the authentication device that performed the authentication process at the time of application, to "accept" the result received. Then, the operator 52 is allowed to change the function content.

For the "accept" method, this may include voice recognition of the operator 52, signals such as gestures, and physical switches such as a button and lock lever. The function content of construction machines includes: work support functions such as a machine control function that operates the work machine in accordance with the design surface, and an autonomous operation function that operates the work machine partially or fully automatically; and safety support functions such as a collision mitigation function that reduces collisions with obstacles, including the worker 51, and an overturn prevention function that prevents the vehicle body from overturning.

Note that it is not always necessary to obtain the approval from the authorized person 60 for work support functions such as machine control functions that are not related to safety. For the work support functions that are not safety-related, the work/function content change section 28 changes the function in response to an application from the work/function content change application section 24 without obtaining the permission determination from the permission determination section 29. For instance, the work support functions not related to safety may be registered in advance. If the application content submitted from the applicant terminal 47 matches the registered content, the work/function content change section 28 changes the work content and function content without obtaining a permission determination from the permission determination section 29.

Note that the functions that an authorized person can approve differ with the job title of the person in charge at the construction site. For instance, a lower-level construction manager such as the site supervisor is in charge of the authorized person 60 for work support functions that enhance construction efficiency, while a higher-level authorized person such as the director is in charge of the authorized person 60 for changes of safety support functions related to the safety at the construction site. For instance, if a single machine applies for a change of a work support function and a change of a safety support function at the same time, the determination device 34 notifies only the upper-level authorized person of the approval for both the functions, and does not transmit it to the lower-level authorized person. Some construction sites do not have upper-level authorized persons. In that case, the authority for all approvals may be given to the construction authorized persons with a single job title. The upper-level authorized person can transfer the approval authority for upper-level authorized persons to a lower-level authorized persons. In that case, it is desirable to obtain the approval from all upper-level authorized persons.

Referring next to Fig. 4, the following describes the processing flow of Embodiment 1. First, in S101, the applicant 50 operates the applicant terminal 47 to apply for a change of work and function content to the determination device 34. Then, in S102, based on the information of the applicant 50, the determination device 34 determines whether or not the applicant 50 has the authority to apply for the change. If the determination device 34 determines that the applicant 50 has the authority for the application, the process proceeds to S103. If the determination device 34 determines that the applicant 50 does not have the authority to apply, the process proceeds to S109, where the determination device 34 disapproves the application, and transmits a notification of reasons for disapproval to the applicant 50 who does not have the authority to apply via the applicant terminal 47 to send "not having authority to apply". Then, the process proceeds to the end.

In S103, the determination device 34 identifies the authorized person 60 who has the authority to approve the content applied in S101, and in S104, the determination device 34 inquires of the authorized person 60 about the content of the application. The processing in S103 and S104 is executed by the authorized person identification section 26 and the application content inquiry section 27 of the determination device 34. In S105, the authority terminal 33 checks whether the authorized person 60 has made a determination about the content of the application. If the determination result is output, the process proceeds to S106. If the determination result is not output, the process returns to S104.

In S106, the work/function content change section 28 determines whether or not the authorized person 60 identified in S103 and the authorized person 60 who made a determination in S105 are the same person. Only if it is confirmed that they are the same person, the process proceeds to S107. If the authorized person 60 identified in S103 and the authorized person 60 who made a determination in S105 are not the same person, the process returns to S104, and the application content inquiry section 27 inquires of the identified authorized person 60 again.

In S107, the work/function content change section 28 checks the determination result by the authorized person 60, and only if the change of work content and function content is approved by the authorized person 60, the process proceeds to S108. If the change of the work content and function content is disapproved by the authorized person 60, the process proceeds to S109, where information on the name, job title, department, and others of the authorized person 60 who disapproved the change, as well as information on comments such as the reasons for disapproval by the authorized person 60 in some cases are transmitted to the applicant terminal 47. Receiving the output with the applicant terminal 47, the applicant 50 is notified as such, and the process proceeds to end. In S108, determination is made whether the applicant 50 performs an operation with the applicant terminal 47 to confirm the determination. Only if the applicant 50 performs an operation to confirm the determination, the process proceeds to S110. If no confirmation operation is performed. the determination is repeated until the applicant 50 performs confirmation operation. When the applicant confirms the information on the determination result permitting the change application, the applicant terminal 47 transmits the confirmed information to the determination device 34. In S110, the determination device 34 changes the work and function content. When receiving the confirmed information from the applicant terminal 47, the determination device 34 changes the work content and function content.

According to the work and function content change determination system in this embodiment, when the applicant 50 applies for a change of work content and function content with the applicant terminal 47, the determination device 34 determines whether or not the applicant 50 has the authority to apply. Then, when the determination device 34 determines that the applicant 50 has the authority to apply for the content, the determination device 34 identifies the authorized person 60 who has the authority to approve the content applied and inquires of the authorized person 60 about the content of the application via the authority terminal 33. Then, the authorized person 60 having the authority for approval determines whether or not to approve the application content. When it is approved, the applicant 50 is notified that he/she is permitted to change the work content and the function content. If the authorized person 60 having the authority for approval does not approve, the applicant is notified via the applicant terminal 47 that the application has been disapproved. In this way, when there are multiple control functions or work contents, this embodiment identifies the authorized person 60 who can make an appropriate determination regarding control contents or work contents with high risk if their limitations are canceled. Then only when the authorized person 60 having the authority approves, the applicant is allowed to change the control contents and the work contents, thus leaving the determination up to the authorized person 60 having the responsibility in a timely manner.

### <Embodiment 2>

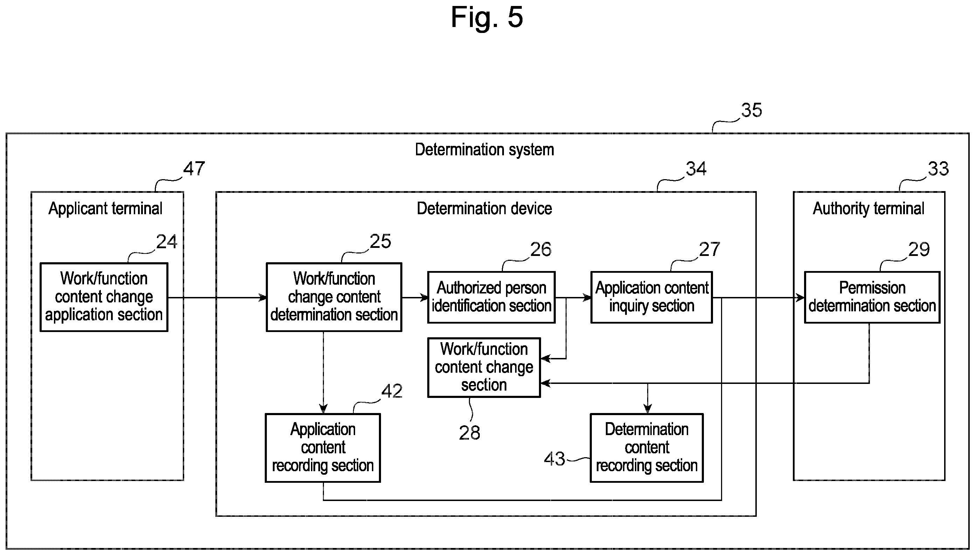

Referring to FIG. 5, the following describes a work and function content change determination system 35 according to Embodiment 2 of the present invention. In Fig. 5, like numerals indicate like components in Fig. 1 to Fig. 4, and their descriptions are omitted. In Embodiment 1, the authorized person 60 determines whether or not to approve the application for change of work and function content from each applicant 50 only based on real-time data. Embodiment 2 is different from Embodiment 1 in that the determination device 34 includes an application content recording section 42 that records the application content in the past for each applicant 50, and a determination content recording section 43 that records the determination content in the past for each authorized person 60. The determination device 34 records past application content and past determination content, and transmits the recorded past application content and past determination content to the authority terminal 33 in response to a request from the authority terminal 33.

Fig. 5 is a functional block diagram of the work and function content change determination system 35 in Embodiment 2. The application content recording section 42 creates a chronological list of changes requested from each applicant 50 with their applicant terminals 47 in the past for recording. In response to a request from the authority terminal 33, the application content recording section 42 transmits the list to the authority terminal 33 of the authorized person 60 having the authority for approval, whereby the authorized person 60 can refer to the change history of the work content or function content of each applicant 50 in the past. In other words, the authorized person 60 can understand the frequency by each applicant of deviating from the construction site rules, and thus can use the list as a supplementary material to determine whether or not to trust the worker 51 or the operator 52, who is the applicant 50, based on the past application content, and determine whether or not to change the work content or function content.

The determination content recording section 43 creates a chronological list of changes determined by each authorized person 60 in accordance with the content of the application from each applicant 50 in the past for recording, and transmits the list to the authority terminal 33 of the authorized person 60 having the authority for approval. Thereby, the authorized person 60 can refer to the determination history in the past by each authorized person 60. That is, if the authorized person 60 is not sure about the determination, they can refer to the past determination history, so as to understand whether other authorized persons 60 have trusted the worker 51 or operator 52 to change the work or function content in the past, and thus the authorized person 60 can use the list as a supplemental material to determine whether or not to trust the worker 51 or operator 52 and change the work content or function content.

The recording of a log of application content and determination content allows an upper-level authorized person to make a determination about, if an accident occurs, the change in the work content or function content that may have caused the accident, and use the information in analyzing accident cases.

### <Embodiment 3>

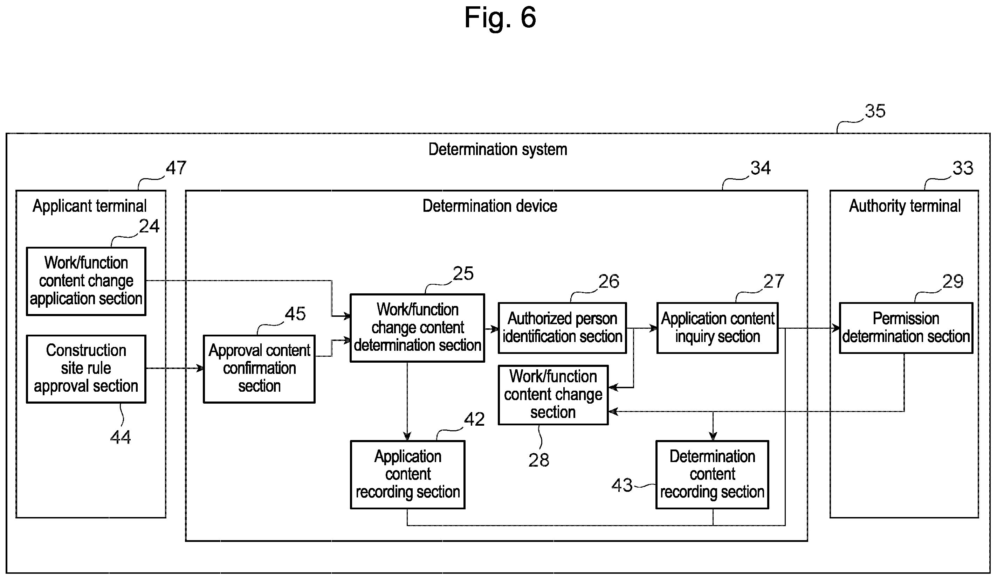

Referring to FIG. 6, the following describes a work and function content change determination system 35 according to Embodiment 3 of the present invention. In Fig. 6, like numerals indicate like components in Fig. 1 to Fig. 5, and their descriptions are omitted. Embodiment 2 uses biometric information and terminal information to verify the identity of the applicant 50 and the authorized person 60, and determines whether the applicant 50 or the authorized person 60 has the authority to apply for a change of work or function content or to make a determination on the change. Embodiment 3 is different from Embodiment 1 in that, in addition to verify the identity of the applicant 50 and the authorized person 60, it has another function of determining whether or not the applicant 50 and the authorized person 60 have approved prescribed construction site rules. When it is determined that the applicant 50 has approved the construction site rules and has the authority for application, the determination device 34 makes an inquiry to the authority terminal 33.

Fig. 6 is a functional block diagram of the work and function content change determination system 35 in Embodiment 3. As shown in Fig. 6, the applicant terminal 47 includes a construction site rule approval section 44, whereby the applicant terminal 47 transmits whether or not the applicant 50 has approved the construction site rules to the determination device 34. The determination device 34 includes an approval content confirmation section 45, and confirms the content of construction site rules approved by each applicant 50 individually that is included in the information received from the applicant terminal 47, and transmits whether or not the applicant has approved construction site rules together with the information of each applicant 50 to the work/function change content determination section 25. The work/function change content determination section 25 confirms, in addition to a work content change or function content change request 37 associated with the information on the applicant, whether or not the applicant has approved the construction rules. Only when the applicant 50 has the authority to apply for a change of the work content or function content and has approved the construction site rules in advance, the work/function change content determination section 25 transmits information on the applicant and on the application content to the authorized person identification section 26, and the application inquiry section 27 makes an inquiry to the authority terminal 33.

In some construction sites, the work content and the contractors including workers 51, operators 52, and construction managers are likely to change on a daily basis, and the construction site rules there may be updated daily. In that case, it is necessary to inform the relevant workers 51, operators 52, and construction managers of the latest construction site rules and possible risks due to deviation from the construction site rules. To this end, the construction manager informs the contractors, including workers 51, operators 52, and other construction managers, of the construction site rules and the risks assumed due to deviations from the construction site rules via e-mail or on the app of the applicant's terminal 47 before the work, and makes each person approve the construction site rules. This means that before each person applies for or approves a change of work content and function content, they can be informed of the risk associated with the change in advance, thus preventing them from easily changing the work content and function content. For instance, the display sections of the applicant terminal 47 and the authority terminal 33 display information to confirm whether or not the applicant and the authorized person have approved the construction site rules in advance.

A list of the risks that may occur due to a change of work content and function content may be created, and this list may be displayed on the display section of the applicant terminal 47, with which the applicant 50 has verified their identity, at the time of application for confirmation. Similarly, also for the authorized person 60, a list of the risks that may occur due to approval of a change of work content and function content may be created, and this list may be displayed on the display section of the authority terminal 33, with which the authorized person 60 has verified their identity, for confirmation. For example, the applicant terminal 47 is configured to output information on the risks that may occur due to a change of the work and function content when outputting the work and function content changed by the work/function content change section 28 in response to a change application, or when transmitting confirmed information to the determination device 34.

That is a detailed description of the embodiments of the present invention. The present invention is not limited to the above-stated embodiments, and the design may be modified variously without departing from the scope of the present invention as defined by the appended claims. For instance, the entire detailed configuration of the embodiments described above for explanatory convenience is not always necessary for the present invention. A part of one embodiment may be replaced with the configuration of another embodiment, or the configuration of one embodiment may be added to the configuration of another embodiment. A part of the configuration of each embodiment may include another configuration that is added, or may be deleted or replaced with another configuration.

### Reference Signs List

- 24: Work/function content change application section
- 25: Work/function change content determination section
- 26: Authorized person identification section
- 27: Application content inquiry section
- 28: Work/function content change section
- 29: Permission determination section
- 33: Authority terminal
- 34: Determination device
- 35: Work and function content change determination system
- 47: Applicant terminal
- 50: Applicant
- 51: Worker (applicant)
- 52: Operator (applicant)
- 60: Authorized person

## Claims

1. A work and function content change determination system (35) configured to determine whether or not to change work content and function content at a civil engineering and construction site, comprising:
a determination device (34) communicably connected to a first terminal (47),
when receiving information on application content of application for change of the work content and function content from the first terminal (47), the determination device (34) using the information on the application content of application for change to identify an authorized person who has authority to approve the application for change, the determination device (34) changing the work content and function content in accordance with the application content and transmitting the work content and function content changed based on the application for change to the first terminal (47),
**characterized in that**
the determination device (34) is communicably connected to a second terminal (33),
when receiving information on application content of application for change of the work content and function content from the first terminal (47), transmitting the information on the application content of application for change and authority information on the authorized person identified to the second terminal (33), and making an inquiry to the authorized person whether or not to change the work content and function content, and when receiving information on a determination result permitting the application for change from the second terminal (33) that the identified authorized person has,
when receiving information on the applicant who makes the application for change of the work content and function content from the first terminal (47), the determination device (34) determines whether or not the applicant has authority to apply for the change of the work content and function content based on the information on the applicant, and when the determination device (34) determines that the applicant has the authority to apply, the determination device (34) makes the inquiry to the second terminal (33), and
when the authorized person identified by the second terminal (33) and the authorized person identified by the determination device (34) do not match, the determination device (34) re-identifies the authorized person, transmits the information on the application content of application for change and authority information on the authorized person re-identified to the second terminal (33), and makes an inquiry to the authorized person whether or not to change the work content and function content.

2. The work and function content change determination system (35) according to claim 1, wherein
when receiving information on a determination result of permitting the application for change from the second terminal (33), the determination device (34) transmits the information on the determination result of permitting the application for change to the first terminal (47),
when the information on the determination result permitting the application for change is confirmed with the first terminal (47), the determination device (34) receives the confirmed information from the first terminal (47), and
when receiving the confirmed information from the first terminal (47), the determination device (34) changes the work content and function content.

3. The work and function content change determination system (35) according to claim 2,
further comprising the first terminal (47), wherein when the determination result of the application for change received from the determination device (34) indicates permission, the first terminal (47) authenticates the applicant again using an authentication device that performs authentication process of the applicant at the time to apply for the change, and accepts the determination result of the application for change after identity of the applicant is verified.

4. The work and function content change determination system (35) according to claim 3,
wherein for a work support function that is not safety-related, the determination device (34) permits to change work content and function content in response to an application for change from the first terminal (47), without obtaining a determination result of permission from the second terminal (33).

5. The work and function content change determination system (35) according to claim 4,
wherein, when a single machine requests a change of a work support function and a change of a safety support function at the same time, the determination device (34) notifies only the second terminal (33) that an upper-level authorized person has about approval for both the functions, and does not transmit to the second terminal (33) that a lower-level authorized person has.

6. The work and function content change determination system (35) according to claim 1, wherein
the determination device (34) records past application content and past determination content, and transmits the recorded past application content and past determination content to the second terminal (33) in response to a request from the second terminal (33).

7. The work and function content change determination system (35) according to claim 1, wherein
the determination device (34) receives, from the first terminal (47), information on whether or not the applicant has approved a construction site rule, and when the determination device (34) determines that the applicant has approved the construction site rule and has authority for the application, the determination device (34) makes the inquiry to the second terminal (33).

8. The work and function content change determination system (35) according to claim 1,
further comprising the first terminal (47), wherein the first terminal (47) is configured to output information on a risk that may occur due to a change of the work content and function content when outputting the work and function content changed in accordance with the application for change or when transmitting the confirmed information to the determination device (34).

## Patentansprüche

1. System (35) zur Bestimmung einer Änderung von Arbeits- und Funktionsinhalten, das konfiguriert ist, um zu bestimmen, ob Arbeitsinhalte und Funktionsinhalte an einer Baustelle für Hochbau bzw. Tiefbau geändert werden sollen oder nicht, umfassend:
eine Bestimmungsvorrichtung (34), die kommunikativ mit einem ersten Endgerät (47) verbunden ist,
wobei, wenn Informationen über Antragsinhalte eines Antrags auf Änderung der Arbeitsinhalte und Funktionsinhalte von dem ersten Endgerät (47) empfangen werden, die Bestimmungsvorrichtung (34) die Informationen über die Antragsinhalte des Antrags auf Änderung verwendet, um eine autorisierte Person zu identifizieren, die berechtigt ist, den Antrag auf Änderung zu genehmigen, wobei die Bestimmungsvorrichtung (34) die Arbeitsinhalte und Funktionsinhalte gemäß den Antragsinhalten ändert und die geänderten Arbeitsinhalte und Funktionsinhalte basierend auf dem Antrag auf Änderung an das erste Endgerät (47) überträgt,
**dadurch gekennzeichnet, dass**
die Bestimmungsvorrichtung (34) kommunikativ mit einem zweiten Endgerät (33) verbunden ist,
wobei, wenn Informationen über Antragsinhalte eines Antrags auf Änderung der Arbeitsinhalte und Funktionsinhalte von dem ersten Endgerät (47) empfangen werden, die Informationen über die Antragsinhalte des Antrags auf Änderung und Berechtigungsinformationen über die identifizierte autorisierte Person an das zweite Endgerät (33) übertragen werden und eine Anfrage an die autorisierte Person gestellt wird, ob die Arbeitsinhalte und Funktionsinhalte geändert werden sollen oder nicht, und wenn Informationen über ein Bestimmungsergebnis empfangen werden, der Antrag auf Änderung von dem zweiten Endgerät (33), das die identifizierte autorisierte Person hat, erlaubt wird,
wenn Informationen über den Antragsteller, der den Antrag auf Änderung der Arbeitsinhalte und Funktionsinhalte stellt, von dem ersten Endgerät (47) empfangen werden, die Bestimmungsvorrichtung (34) basierend auf den Informationen über den Antragsteller bestimmt, ob der Antragsteller die Berechtigung hat, die Änderung der Arbeitsinhalte und Funktionsinhalte zu beantragen, oder nicht, und wenn die Bestimmungsvorrichtung (34) bestimmt, dass der Antragsteller die Berechtigung hat, den Antrag zu stellen, die Bestimmungsvorrichtung (34) die Anfrage an das zweite Endgerät (33) stellt, und
wenn die autorisierte Person, die durch das zweite Endgerät (33) identifiziert wird, und die autorisierte Person, die durch die Bestimmungsvorrichtung (34) identifiziert wird, nicht übereinstimmen, die Bestimmungsvorrichtung (34) die autorisierte Person erneut identifiziert, die Informationen über die Antragsinhalte des Antrags auf Änderung und Berechtigungsinformationen über die erneut identifizierte autorisierte Person an das zweite Endgerät (33) überträgt und eine Anfrage an die autorisierte Person stellt, ob die Arbeitsinhalte und Funktionsinhalte geändert werden sollen oder nicht.

2. System (35) zur Bestimmung einer Änderung von Arbeits- und Funktionsinhalten nach Anspruch 1, wobei,
wenn Informationen über ein Bestimmungsergebnis des Erlaubens des Antrags auf Änderung von dem zweiten Endgerät (33) empfangen werden, die Bestimmungsvorrichtung (34) die Informationen über das Bestimmungsergebnis des Erlaubens des Antrags auf Änderung an das erste Endgerät (47) überträgt,
wenn die Informationen über das Bestimmungsergebnis, das den Antrag auf Änderung erlaubt, mit dem ersten Endgerät (47) bestätigt werden, die Bestimmungsvorrichtung (34) die bestätigten Informationen von dem ersten Endgerät (47) empfängt, und
wenn die bestätigten Informationen von dem ersten Endgerät (47) empfangen werden, die Bestimmungsvorrichtung (34) die Arbeitsinhalte und Funktionsinhalte ändert.

3. System (35) zur Bestimmung einer Änderung von Arbeits- und Funktionsinhalten nach Anspruch 2,
ferner umfassend das erste Endgerät (47), wobei, wenn das Bestimmungsergebnis des Antrags auf Änderung, das von der Bestimmungsvorrichtung (34) empfangen wird, eine Erlaubnis angibt, das erste Endgerät (47) den Antragsteller unter Verwendung einer Authentifizierungsvorrichtung, die einen Authentifizierungsprozess des Antragstellers zum Zeitpunkt des Beantragens der Änderung durchführt, erneut authentifiziert und das Bestimmungsergebnis des Antrags auf Änderung akzeptiert, nachdem die Identität des Antragstellers verifiziert ist.

4. System (35) zur Bestimmung einer Änderung von Arbeits- und Funktionsinhalten nach Anspruch 3,
wobei für eine Arbeitsunterstützungsfunktion, die nicht sicherheitsrelevant ist, die Bestimmungsvorrichtung (34) es erlaubt, Arbeitsinhalte und Funktionsinhalte als Reaktion auf einen Antrag auf Änderung von dem ersten Endgerät (47) zu ändern, ohne ein Bestimmungsergebnis der Erlaubnis von dem zweiten Endgerät (33) zu erhalten.

5. System (35) zur Bestimmung einer Änderung von Arbeits- und Funktionsinhalten nach Anspruch 4,
wobei, wenn eine einzelne Maschine gleichzeitig eine Änderung einer Arbeitsunterstützungsfunktion und eine Änderung einer Sicherheitsunterstützungsfunktion anfordert, die Bestimmungsvorrichtung (34) nur das zweite Endgerät (33) benachrichtigt, das eine autorisierte Person hat, die einen höheren Grad für eine Zulassung für beide Funktionen besitzt, und nicht an das zweite Endgerät (33) überträgt, das eine autorisierte Person hat, die einen niedrigeren Grad besitzt.

6. System (35) zur Bestimmung einer Änderung von Arbeits- und Funktionsinhalten nach Anspruch 1, wobei
die Bestimmungsvorrichtung (34) vergangene Antragsinhalte und vergangene Bestimmungsinhalte aufzeichnet und die aufgezeichneten vergangenen Antragsinhalte und vergangenen Bestimmungsinhalte als Reaktion auf eine Anforderung von dem zweiten Endgerät (33) an das zweite Endgerät (33) überträgt.

7. System (35) zur Bestimmung einer Änderung von Arbeits- und Funktionsinhalten nach Anspruch 1, wobei
die Bestimmungsvorrichtung (34) von dem ersten Endgerät (47) Informationen darüber empfängt, ob der Antragsteller eine Baustellenregel genehmigt hat oder nicht, und wenn die Bestimmungsvorrichtung (34) bestimmt, dass der Antragsteller die Baustellenregel genehmigt hat und Autorität für den Antrag hat, die Bestimmungsvorrichtung (34) die Anfrage an das zweite Endgerät (33) stellt.

8. System (35) zur Bestimmung einer Änderung von Arbeits- und Funktionsinhalten nach Anspruch 1,
ferner umfassend das erste Endgerät (47), wobei das erste Endgerät (47) konfiguriert ist, um Informationen über ein Risiko auszugeben, das aufgrund einer Änderung der Arbeits- und Funktionsinhalte auftreten kann, wenn die Arbeits- und Funktionsinhalte, die gemäß dem Antrag auf Änderung geändert wurden, ausgegeben werden oder wenn die bestätigten Informationen an die Bestimmungsvorrichtung (34) übertragen werden.

## Revendications

1. Système de détermination de modification de contenu de travail et de fonctionnement (35) configuré pour déterminer s'il faut oui ou non modifier un contenu de travail et un contenu de fonctionnement au niveau d'un site de construction et de génie civil, comprenant :
un dispositif de détermination (34) connecté en communication à un premier terminal (47),
lorsque des informations concernant un contenu de demande d'une demande de modification de contenu de travail et de contenu de fonctionnement sont reçues depuis le premier terminal (47), le dispositif de détermination (34) utilise les informations concernant le contenu de demande d'une demande de modification pour identifier une personne autorisée ayant l'autorisation d'approuver la demande de modification, le dispositif de détermination (34) modifie le contenu de travail et le contenu de fonctionnement en accord avec le contenu de demande, et transmet le contenu de travail et le contenu de fonctionnement modifiés sur la base de de la demande de modification au premier terminal (47),
**caractérisé en ce que**
le dispositif de détermination (34) est connecté en communication à un second terminal (33),
lorsque des informations concernant un contenu de demande d'une demande de modification de contenu de travail et de contenu de fonctionnement sont reçues depuis le premier terminal (47), le dispositif de détermination (34) transmet les informations concernant le contenu de demande d'une demande de modification et les informations d'autorisation concernant la personne autorisée identifiée au second terminal (33), et fait une demande de renseignements à la personne autorisée pour savoir s'il faut oui ou non modifier le contenu de travail et le contenu de fonctionnement, et lorsque des informations concernant un résultat de détermination sont reçues, permet la demande de modification depuis le second terminal (33) dont dispose la personne autorisée identifiée,
lorsque des informations concernant un demandeur qui fait la demande de modification du contenu de travail et du contenu de fonctionnement sont reçues depuis le premier terminal (47), le dispositif de détermination (34) détermine si le demandeur a oui ou non l'autorisation de demander la modification de contenu de travail et de contenu de fonctionnement sur la base des informations concernant le demandeur, et quand le dispositif de détermination (34) détermine que le demandeur a l'autorisation de faire la demande, le dispositif de détermination (34) fait la demande de renseignements au second terminal (33), et
quand la personne autorisée identifiée par le second terminal (33) et la personne autorisée identifiée par le dispositif de détermination (34) ne correspondent pas, le dispositif de détermination (34) ré-identifie la personne autorisée, transmet les informations concernant le contenu de demande d'une demande de modification et les informations d'autorisation concernant la personne autorisée ré-identifiée au second terminal (33), et fait une demande de renseignements à la personne autorisée pour savoir s'il faut oui ou non modifier le contenu de travail et le contenu de fonctionnement.

2. Système de détermination de modification de contenu de travail et de fonctionnement (35) selon la revendication 1, dans lequel
Lorsque des informations concernant un résultat de détermination consistant à permettre la demande de modification sont reçues depuis le second terminal (33), le dispositif de détermination (34) transmet les informations concernant le résultat de détermination consistant à permettre la demande de modification au premier terminal (47,
quand les informations concernant le résultat de détermination permettant la demande de modification sont confirmées avec le premier terminal (47), le dispositif de détermination (34) reçoit les informations confirmées depuis le premier terminal (47), et
lorsque les informations confirmées sont reçues depuis le premier terminal (47), le dispositif de détermination (34) modifie le contenu de travail et le contenu de fonctionnement.

3. Système de détermination de modification de contenu de travail et de fonctionnement (35) selon la revendication 2,
comprenant en outre le premier terminal (47), dans lequel, quand le résultat de détermination de la demande de modification reçu depuis le dispositif de détermination (34) indique une permission, le premier terminal (47) authentifie à nouveau le demandeur en utilisant un dispositif d'authentification qui effectue un processus d'authentification du demandeur au moment de la demande de modification, et accepte le résultat de détermination de la demande de modification après vérification de l'identité du demandeur.

4. Dispositif de détermination de modification de contenu de travail et de fonctionnement (35) selon la revendication 3,
dans lequel, pour un fonctionnement d'assistance au travail qui n'est pas lié à la sécurité, le dispositif de détermination (34) permet de modifier un contenu de travail et un contenu de fonctionnement en réponse à une demande de modification depuis le premier terminal (47) sans obtenir de résultat de détermination de permission depuis le second terminal (33).

5. Système de détermination de modification de contenu de travail et de fonctionnement (35) selon la revendication 4,
dans lequel, quand une seule machine sollicite une modification de fonctionnement de support de travail et une modification de fonctionnement de support de sécurité en même temps, le dispositif de détermination (34) informe uniquement le second terminal (33) dont dispose une personne autorisée de niveau supérieur de l'accord pour les deux fonctionnements, et ne transmet pas au second terminal (33) dont dispose une personne autorisée de niveau inférieur.

6. Système de détermination de modification de contenu de travail et de fonctionnement (35) selon la revendication 1, dans lequel
le dispositif de détermination (34) enregistre un contenu de demande passé et un contenu de détermination passé, et transmet le contenu de demande passé et le contenu de détermination passé au second terminal (33) en réponse à une requête depuis le second terminal (33).

7. Système de détermination de modification de contenu de travail et de modification (35) selon la revendication 1, dans lequel
le dispositif de détermination (34) reçoit, depuis le premier terminal (47), des informations concernant le fait de savoir si le demandeur a oui ou non approuvé une règle de site de construction, et quand le dispositif de détermination (34) détermine que le demandeur a approuvé la règle de site de construction et a l'autorisation de la demande, le dispositif de détermination (34) fait une demande de renseignements au second terminal (33).

8. Système de détermination de modification de contenu travail et de fonctionnement (35) selon la revendication 1,
comprenant en outre le premier terminal (47), dans lequel le premier terminal (47) est configuré pour sortir des informations concernant un risque qui peut se produire en raison d'une modification du contenu de travail et du contenu de fonctionnement quand le contenu de travail et de fonctionnement modifiés selon la demande de modification sont sortis ou quand les informations confirmées sont transmises au dispositif de détermination (34).
